Europäisches Patentamt

European Patent Office

Office européen des brevets

(11) Veröffentlichungsnummer: **0 334 431 B1**

# EUROPÄISCHE PATENTSCHRIFT

(45) Veröffentlichungstag der Patentschrift: **21.07.93**

(21) Anmeldenummer: **89200663.6**

(22) Anmeldetag: **16.03.89**

(51) Int. Cl.⁵: **H02M 3/10**, H02M 1/08, H02M 3/156, H05B 39/04

(54) **Schaltungsanordnung zur Erzeugung einer Impuls-Versorgungsspannung für einen Verbraucher aus einer Gleichspannung.**

(30) Priorität: **22.03.88 DE 3809481**

(43) Veröffentlichungstag der Anmeldung:
**27.09.89 Patentblatt 89/39**

(45) Bekanntmachung des Hinweises auf die
Patenterteilung:
**21.07.93 Patentblatt 93/29**

(84) Benannte Vertragsstaaten:
**BE DE FR GB NL**

(56) Entgegenhaltungen:
**EP-A- 0 005 311**
**EP-A- 0 157 356**
**DE-A- 3 308 959**
**US-A- 3 317 820**
**US-A- 3 707 635**

(73) Patentinhaber: **Philips Patentverwaltung GmbH**
**Wendenstrasse 35 Postfach 10 51 49**
**W-2000 Hamburg 1(DE)**
(84) Benannte Vertragsstaaten:
**DE**

(73) Patentinhaber: **N.V. Philips' Gloeilampenfa-**
brieken
**Groenewoudseweg 1**
**NL-5621 BA Eindhoven(NL)**
(84) Benannte Vertragsstaaten:
**BE FR GB NL**

(72) Erfinder: **Bauch, Wolf-Dieter**
**Wagnerstrasse 3**
**W-5162 Niederzier 3(DE)**
Erfinder: **Helmus, Heinz**
**Peterstrasse 2**
**W-5100 Aachen(DE)**
Erfinder: **Merker, Heinz, Dr.**
**Oststrasse 14b**
**W-5170 Jülich(DE)**

(74) Vertreter: **Kupfermann, Fritz-Joachim,**
**Dipl.-Ing. et al**
**Philips Patentverwaltung GmbH Wenden-**
**strasse 35 Postfach 10 51 49**
**W-2000 Hamburg 1 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 334 431 B1

## Beschreibung

Die Erfindung bezieht sich auf eine Schaltungsanordnung zur Erzeugung einer Impuls-Versorgungspannung für einen Verbraucher aus einer Gleichspannung, wobei der vorgegebene Effektivwert der Versorgungsspannung bei sich ändernder Gleichspannung weitgehend konstant bleibt, mit einem die Versorgungsspannung liefernden Schalter, mit einem mit dem Verbraucher gekoppelten und eine Mittelwertspannung erzeugenden Tiefpaß sowie mit einer die Mittelwertspannung erhaltenden Schmitt-Trigger-Schaltung, die den Schalter öffnet, wenn die Mittelwertspannung eine erste Schaltschwelle erreicht und die den Schalter schließt, wenn die Mittelwertspannung eine zweite Schaltschwelle erreicht.

Eine solche Schaltungsanordnung ist aus der DE-OS 33 08 959 bekannt, die dazu dient, aus einer schwankenden Gleichspannung eine aus Impulsen bestehende Versorgungsspannung zu erzeugen, deren Effektivwert weitgehend konstant ist. Die Leistung an einem ohmschen Verbraucher oder die Lichtleistung an einer Glühlampe ist direkt proportional dem Effektivwert der anliegenden Versorgungsspannung. Bei der bekannten Schaltungsanordnung wird eine Glühlampe über einen Schalter, aus einem Akkumulator oder einer Batterie, gespeist, deren Gleichspannung im Laufe des Betriebes abnimmt. Die Versorgungsspannung wird in einem Quadrierglied quadriert und die quadrierte Versorgungsspannung wird in einem Summierer mit einer Sollspannung verglichen. Die Ausgangsspannung des Summierers wird über einen eine Mittelwertspannung bildenden Tiefpaß einer Schmitt-Trigger-Schaltung zugeführt, die einen zwischen der Gleichspannungsquelle und der Glühlampe angeordneten Schalter steuert. Die Sollspannung entspricht dem quadrierten vorgegebenen Effektivwert. Die Schaltschwellen der Schmitt-Trigger-Schaltung sind so eingestellt, daß das Verhältnis von Impulsdauer zu Impulsdauer plus Impulspause (Tastverhältnis) dem Mittelwert der Ausgangsspannung des Summierers entspricht. Ein Quadrierglied, das in der Schaltung benötigt wird, weist in der Regel sehr viele Bauelemente auf, ist kompliziert aufgebaut und ohne eine zusätzliche Temperaturkompensationsschaltung nicht temperaturstabil.

Eine weitere Schaltungsanordnung ist aus der US-A-37 07 635 bekannt, bei der zumindest die Ermittlung einer Spannung direkt vom Verbraucher über ein RC-Glied (Tiefpaß) und die Ansteuerung eines Schalters in Abhängigkeit einer Kondensatorspannung vorgesehen sind.

Der Erfindung liegt daher die Aufgabe zugrunde, eine Schaltungsanordnung zur Erzeugung einer Impuls-Versorgungspannung für einen Verbraucher aus einer Gleichspannung zu schaffen, die einfach aufgebaut ist.

Diese Aufgabe wird bei einer Schaltungsanordnung der eingangs genannten Art dadurch gelöst, daß der Tiefpaß die Mittelwertspannung direkt aus der Versorgungsspannung bildet und daß die erste obere aus einer am ersten Eingang der Schmitt-Trigger-Schaltung anliegenden Referenzspannung abgeleitete Schaltschwelle konstant ist und die zweite untere Schaltschwelle sich entgegengesetzt zur abnehmenden Gleichspannung ändert.

Bei dieser Schaltungsanordnung sind die Schaltschwellen der Schmitt-Trigger-Schaltung nicht so eingestellt, daß das Tastverhältnis gleich dem Mittelwert der am Tiefpaß anliegenden Spannung ist, sondern sie sind so eingestellt, daß das Tastverhältnis gleich dem Effektivwert der am Tiefpaß anliegenden Spannung ist. Dazu ist es erforderlich, daß der Tiefpaß direkt die Versorgungsspannung erhält, also an dem Verbraucher angeschlossen ist. Durch diese Maßnahme wird kein Quadrierglied wie bei der bekannten Schaltungsanordnung benötigt.

Die Schaltschwellen können hierbei durch praktische Versuche oder durch eine Berechnung ermittelt werden. Bei der Berechnung muß für einen gewünschten Effektivwert das Tastverhältnis bestimmt werden. Durch Verknüpfung des Tastverhältnisses mit der Tiefpaßfunktion ergeben sich die gesuchten Schaltschwellen.

Die Gleichspannung wird durch eine Batterie erzeugt, die mit zunehmender Betriebsdauer abnimmt. Um den erforderlichen Effektivwert zu erhalten, bleibt die erste Schaltschwelle, die von der Referenzspannung abhängig ist, konstant und die zweite Schaltschwelle verändert sich entgegengesetzt zur abnehmenden Versorgungsspannung.

In einer bevorzugten Ausführungsform der Erfindung ist vorgesehen, daß die Schmitt-Trigger-Schaltung einen Verstärker enthält, an dessen invertierenden Eingang eine die Referenzspannung liefernde Referenzspannungsquelle, an dessen nichtinvertierenden Eingang ein die Mittelwertspannung erhaltender Eingangswiderstand und an dessen Ausgang ein Mitkopplungswiderstand angeschlossen ist. Hierbei ist der Verstärker nichtinvertierend geschaltet. Es ist auch möglich, einen invertierenden Verstärker zu verwenden, dessen invertierender Eingang die Mittelwertspannung und dessen nichtinvertierender Eingang mit dem Ausgang über einen Spannungsteiler, an den noch eine Referenzspannungsquelle angeschlosssen ist, gekoppelt ist. Um Bauelemente zu sparen ist vorgesehen, daß der Tiefpaß mit der Schmitt-Trigger-Schaltung so verknüpft ist, daß der Mitkopplungswiderstand und der Eingangswiderstand die Zeitkonstante des Tiefpaßes mitbestimmen.

Um die Spannung am invertierenden Eingang der Schmitt-Trigger-Schaltung zu verringern, ist vorgesehen, daß ein an Masse angeschlossener Teilerwiderstand mit dem nichtinvertierenden Eingang des Verstärkers gekoppelt ist.

Vorzugsweise enthält der Schalter wenigstens einen Transistor, dessen Basis mit dem Ausgang der Schmitt-Trigger-Schaltung gekoppelt ist und dessen Emitter-Kollektor-Strecke zwischen den Gleichspannungsanschluß und den Verbraucher geschaltet ist.

Durch den platzsparenden Aufbau der Schaltungsanordnung kann diese in einer Taschenleuchte verwendet werden, wobei der Verbraucher eine Halogenglühlampe ist.

Ein Ausführungsbeispiel der Erfindung wird nachstehend anhand der Zeichnungen näher erläutert. Es zeigen:

Fig. 1 eine Schaltungsanordnung zur Erzeugung einer aus Impulsen bestehenden Versorgungsspannung für eine Halogenlampe aus einer Batteriespannung und

Fig. 2 Spannungen, die in der Schaltungsanordnung nach Fig. 1 auftreten.

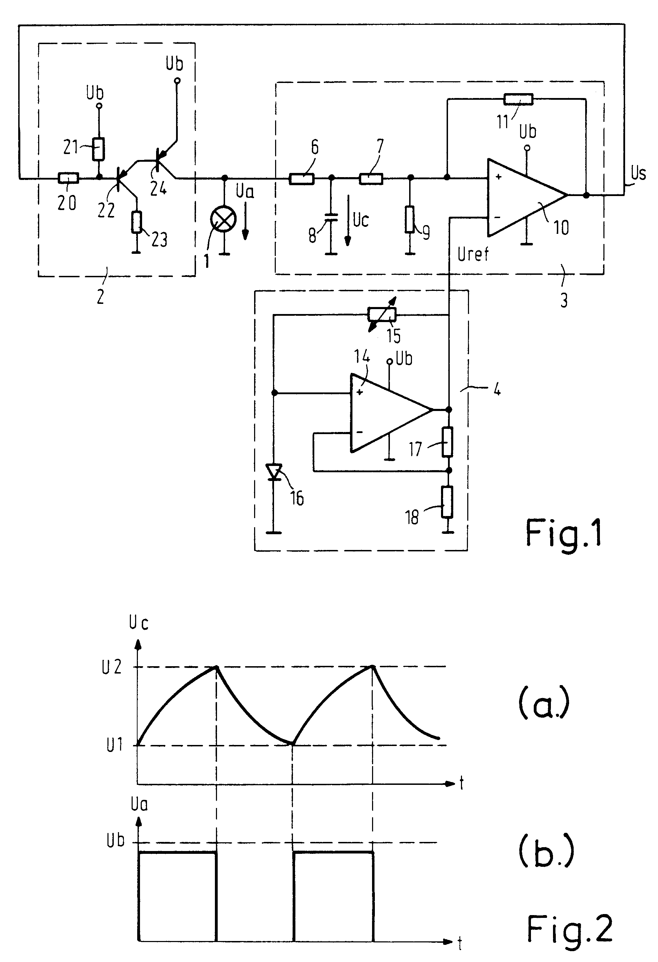

Die in Fig. 1 dargestellte Schaltungsanordnung dient zur Versorgung einer Halogenglühlampe 1, die z.B. in einer Taschenleuchte verwendet wird. Die Versorgungsspannung Ua, die an der Halogenglühlampe 1 anliegt, besteht aus Impulsen, die von einem Schalter 2 geliefert werden. Im geschlossenen Zustand verbindet der Schalter 2 die Glühlampe 1 mit dem Pluspol einer hier nicht näher dargestellten Batterie und im offenen Zustand unterbricht er diese Verbindung. Gesteuert wird der Schalter 2 von einer Schmitt-Trigger-Schaltung 3 mit einem Tiefpaß, der eine Referenzspannung Uref von einer Referenzspannungsquelle 4 zugeführt wird. Die Lichtleistung der Lampe 1 ist proportional dem Effektivwert der Lampenversorgungsspannung Ua. Der Schmitt-Trigger 3 steuert den Schalter 2 so, daß das Verhältnis von Impulsdauer zu Impulsdauer plus Impulspause (Tastverhältnis) dem vorgegebenen Effektivwert entspricht.

Der nicht an Masse angeschlossene Anschluß der Glühlampe 1 ist mit einem Widerstand 6 verbunden, dessen anderer Anschluß einerseits an einen weiteren Widerstand 7 (Eingangswiderstand) und andererseits an einen mit Masse verbundenen Kondensator 8 angeschlossen ist. Der andere Anschluß des Widerstandes 7 ist mit einem an Masse angeschlossenen Widerstand 9 (Teilerwiderstand) und mit dem nichtinvertierenden Eingang eines Verstärkers 10 verbunden. Zwischen dem nichtinvertierenden Eingang des Verstärkers 10 und seinem Ausgang befindet sich noch ein Widerstand 11 (Mitkopplungswiderstand). Dem invertierenden Eingang des Verstärkers 10 die eine Referenzspannung Uref von der Referenzspannungsquelle 4 zugeführt.

Die eigentliche Schmitt-Trigger-Schaltung wird durch die Widerstände 7, 9 und 11 und den Verstärker 10 gebildet. Die der Schmitt-Trigger-Schaltung zugeführte Mittelwertspannung Uc am Kondensator 8 wird durch einen Tiefpaß erzeugt, der im wesentlichen aus dem Widerstand 6 und dem Kondensator 8 besteht. Bei der Berechnung der Zeitkonstante müssen jedoch, da der Tiefpaß und die Schmitt-Trigger-Schaltung nicht entkoppelt sind, die Widerstände 7 und 9 berücksichtigt werden.

Die Referenzspannungsquelle 4 enthält einen Verstärker 14, dessen nichtinvertierender Eingang mit einem Anschluß eines NTC-Widerstandes 15 und mit der Anode einer Diode 16 verbunden ist. Die Kathode der Diode 16 ist an Masse gelegt. Der invertierende Eingang des Verstärkers 14 ist einerseits über einen Widerstand 17 mit dem Ausgang des Verstärkers 14 und dem anderen Anschluß des NTC-Widerstandes 15 verbunden und andererseits an einen an Masse gelegten Widerstand 18 angeschlossen. Der gemeinsame Anschluß des Widerstandes 17, des Ausganges des Verstärkers 14 und des NTC-Widerstandes 15 ist an den invertierenden Eingang des Verstärkers 10 der Schmitt-Trigger-Schaltung 3 gelegt. Der NTC-Widerstand 15 dient zur Temperaturstabilisierung.

Die am Ausgang der Schmitt-Trigger-Schaltung 3 erzeugte Spannung Us wird einem Widerstand 20 zugeführt, der Bestandteil des Schalters 2 ist. Der andere Anschluß des Widerstandes 20 ist über einen weiteren Widerstand 21 an den Pluspol der Batterie angeschlossen, und mit der Basis eines PNP-Transistors 22 verbunden. Der Kollektor des Transistors 22 ist an einen an Masse gelegten Widerstand 23 angeschlossen. Der Emitter des Transistors 22 ist mit der Basis eines weiteren PNP-Transistors 24 gekoppelt, dessen Kollektor mit dem Widerstand 6 und der Halogenglühlampe 1 verbunden ist. Dem Emitter des Transistors 24 wird die Batteriespannung Ub zugeführt. Die von dem Schalter 2 erzeugten Impulse weisen einen Spannungswert auf, der gleich der Batteriespannung Ub verringert um die Sättigungsspannung des Transistors 24 ist. Die Widerstände 20 und 21 dienen zur Ansteuerung des Transistors 22.

Mit Hilfe der Spannungsverläufe in Fig. 2 wird nun die Funktion der Schaltungsanordnung nach Fig. 1 erläutert. Die Schmitt-Trigger-Schaltung 3 erzeugt Impulse (Us), die dem Schalter 2 zugeführt werden. Verändert sich die Spannung Us am Ausgang der Schaltung 3 von einem hohen zu einem niedrigen Spannungszustand, wird der Transistor 22 durchgesteuert und die Basis vom Transistor 24 wird auf einen niedrigen Spannungszustand gezogen. Dadurch wird der Transistor 24 leitend. Liegt an der Basis des Transistors 22, d.h. am Eingang des Schalters 2 ein hoher Spannungszustand vor, so sind die beiden Transistoren 22 und 24 gesperrt. Die Halogenglühlampe 1 wäre in diesem Falle spannungslos. Der Schalter 2 invertiert also die ihm gelieferte Spannung, so daß, wenn die Schmitt-Trigger-Schaltung 3 einen Impuls erzeugt, der Schalter 2 eine Impulspause bildet.

Bei Vorliegen eines Impulses (Fig. 2b) am Ausgang des Schalters 2 bildet der Tiefpaß in der Schaltung 3 eine exponentiell ansteigende Mittelwertspannung Uc (Fig. 2a). Liegt eine Impulspause vor, so fällt die Mittelwertspannung Uc expotentiell ab. Steigt die Mittelwertspannung Uc an und erreicht die erste Schaltschwelle U2 der Schmitt-Trigger-Schaltung 3, so wird der Spannungszustand am Ausgang dieser Schaltung umgeschaltet und der Transistor 24 gesperrt, so daß eine Impulspause vorliegt. Von diesem Zeitpunkt ab liefert der Tiefpaß eine expotentiell abfallende Mittelwertspannung Uc. Erreicht die Mittelwertspannung Uc die zweite Schaltschwelle U1, so wird die Ausgangsspannung der Schaltung 3 umgeschaltet und der Schalter 2 beginnt mit der Zuführung eines neuen Impulses zur Glühlampe 1. In Fig. 2b ist noch die Batteriespannung Ub gestrichelt eingezeichnet, die oberhalb der Impulse liegt.

Die Schaltschwellen der Schmitt-Trigger-Schaltung 3 werden durch die Referenzspannung Uref, die Widerstände 7, 9 und 11 und die Batteriespannung Ub bestimmt. Für die erste Schaltschwelle U2 gilt:

$$U2 = (1 + R1/R2 + R1/R2 + R1/R3)\ Uref,$$

und für die zweite Schaltschwelle:

$$U1 = U2 - R1/R3\ Ub,$$

wobei R1 der Widerstandswert des Widerstandes 7, R2 der Widerstandswert des Widerstandes 9 und R3 der Widerstandswert des Widerstandes 11 ist.

Die Widerstände 7 und 11 können durch praktische Versuche oder durch Berechnung so bestimmt werden, daß das Tastverhältnis, d.h. das Verhältnis von Impulsdauer zu Impulsdauer plus Impulspause, dem vorgegebenen Effektivwert entspricht. Bei einer Abnahme der Batteriespannung Ub steigt die zweite Schaltschwelle U1. Dadurch bleibt der Effektivwert auch bei sinkender Batteriespannung Ub im wesentlichen auf seinem vorgegebenen Wert. Durch diesen Anstieg der zweiten Schaltschwelle U1 wird die Taktfrequenz, d.h. der Abstand zwischen zwei Impulsen erhöht, wodurch der gewünschte Effektivwert erhalten bleibt.

Der Schalter 2 kann so dimensioniert werden, daß bei einer Batteriespannung, die unterhalb einer Spannung liegt, welche ungefähr gleich dem Effektivwert ist, der Transistor 24 durchgeschaltet ist, so daß die Lampe 1 dann mit einer Gleichspannung versorgt wird, die gleich der Batteriespannung vermindert um die Sättigungsspannung des Transistors 24 ist.

Bei einem praktischen Ausführungsbeispiel zur Speisung einer 4 V/0,5 A-Halogenglühlampe aus einer 6 V-Batterie wurden folgende Bauelemente verwendet:

Verstärker 10 und 14: LM 358
Transistor 24: BD 558
Transistor 22: BD 436
Kondensator 8: 0,047 $\mu$F
Widerstände 6, 7 und 18: 47 kOhm
Widerstand 9: 68 kOhm
Widerstand 11: 150 kOhm
Widerstand 17: 60 kOhm
Widerstand 20: 2,2 kOhm
Widerstand 21: 15 kOhm
NTC-Widerstand 15: NTC 470 R
Diode 16: 1 N 4148.

**Patentansprüche**

1. Schaltungsanordnung zur Erzeugung einer Impuls-Versorgungsspannung für einen Verbraucher (1) aus einer Gleichspannung, wobei der vorgegebene Effektivwert der Versorgungsspannung bei sich ändernder Gleichspannung weitgehend konstant bleibt,
mit einem die Versorgungsspannung liefernden Schalter (2), mit einem mit dem Verbraucher gekoppelten und eine Mittelwertspannung erzeugenden Tiefpaß (6, 8) sowie
mit einer die Mittelwertspannung erhaltenden Schmitt-Trigger-Schaltung (3), die den Schalter öffnet, wenn die Mittelwertspannung eine erste Schaltschwelle (U2) erreicht, und die den Schalter schließt, wenn die Mittelwertspannung eine zweite Schaltschwelle (U1) erreicht, dadurch gekennzeichnet, daß der Tiefpaß (6, 8) die Mittelwertspannung direkt aus der Versorgungsspannung bildet und daß die erste obere aus einer am ersten Eingang der Schmitt-Trigger-Schaltung (3) anliegenden Referenzspannung abgeleitete Schaltschwelle (U2) konstant ist und
die zweite untere Schaltschwelle (U1) sich entgegengesetzt zur abnehmenden Gleichspannung ändert.

2. Schaltungsanordnung nach Anspruch 1, dadurch gekennzeichnet, daß die Schmitt-Trigger-Schaltung (3) einen Verstärker (10) enthält, an dessen invertierenden Eingang eine die Referenzspannung liererende Referenzspannungsquelle (4), an dessen nichtinvertierenden Eingang ein die Mittelwertspannung erhaltender Eingangswiderstand (7) und an dessen Ausgang ein Mitkopplungswiderstand (11) angeschlossen ist.

3. Schaltungsanordnung nach Anspruch 2, dadurch gekennzeichnet, daß ein an Masse angeschlossener Teilerwiderstand (9) mit dem nichtinvertierenden Eingang des Verstärkers (10) gekoppelt ist.

4. Schaltungsanordnung nach einem der vorhergehenden Ansprüche, dadurch gekennzeichnet, daß der Schalter (2) wenigstens einen Transistor (24) enthält, dessen Basis mit dem Ausgang der Schmitt-Trigger-Schaltung (3) gekoppelt ist und dessen Emitter-Kollektor-Strecke zwischen den Gleichspannungsanschluß (Ub) und den Verbraucher (1) geschaltet ist.

5. Verwendung einer Schaltungsanordnung nach einem der vorhergehenden Ansprüche in einer Taschenleuchte mit einer Halogenglühlampe als Verbraucher (1).

## Claims

1. A circuit arrangement for generating a pulsatory supply voltage for a load (1) from a direct voltage, in which the predetermined effective value of the supply voltage remains substantially constant in the case of a varying direct voltage, said circuit arrangement comprising a switch (2) supplying the supply voltage, a low-pass filter (6, 8) coupled to the load and generating a mean value voltage, and a Schmitt trigger circuit (3) receiving the mean value voltage and closing the switch when the mean value voltage reaches a first switching threshold (U2) and opening the switch when the mean value voltage reaches a second switching threshold (U1), characterized in that the low-pass filter (6, 8) directly generates the mean value voltage from the supply voltage and in that the first, upper switching threshold (U2) derived from a reference voltage which is present at the first input of the Schmitt trigger circuit 3 is constant and the second, lower switching threshold (U1) varies oppositely with respect to the decreasing direct voltage.

2. A circuit arrangement as claimed in Claim 1, characterized in that the Schmitt trigger circuit (3) comprises an amplifier (10) to whose inverting input a reference voltage source (4) supplying the reference voltage is connected, to whose non-inverting input an input resistor (7) receiving the mean value voltage is connected and to whose output a positive feedback resistor (11) is connected.

3. A circuit arrangement as claimed in Claim 2, characterized in that a grounded divider resistor (9) is coupled to the non-inverting input of the amplifier (10).

4. A circuit arrangement as claimed in any one of the preceding Claims, characterized in that the switch (2) comprises at least a transistor (24) whose base is coupled to the output of the Schmitt trigger circuit (3) and whose emitter-collector path is arranged between the direct voltage terminal (Ub) and the load (1).

5. The use of a circuit arrangement as claimed in any of the preceding claims in a torch comprising a halogen incandescent lamp as the load (1).

## Revendications

1. Circuit pour engendrer à partir d'une tension continue une tension d'alimentation impulsionnelle destinée pour une charge (1), la valeur effective prédéterminée de la tension d'alimentation restant sensiblement constante dans le cas d'une tension continue variable, comportant un commutateur (2) fournissant la tension d'alimentation, un filtre passe-bas (6, 8) couplé à la charge et engendrant une tension de valeur moyenne, ainsi qu'un circuit de déclenchement Schmitt (3) maintenant la tension de valeur moyenne, qui ouvre le commutateur lorsque la tension de valeur moyenne atteint un premier seuil de commutation (U2) et qui ferme le commutateur lorsque la tension de valeur moyenne atteint un deuxième seuil de commutation (U1), caractérisé en ce que le filtre passe-bas (6, 8) engendre la tension de valeur moyenne directement à partir de la tension d'alimentation et en ce que le premier seuil de commutation supérieur (U2) dérivé d'une tension de référence disponible sur la première entrée du circuit de déclenchement Schmitt (3) est constant et en ce que le deuxième seuil de commutation inférieur (U1) varie inversement par rapport à la tension continue qui diminue.

2. Circuit selon la revendication 1, caractérisé en ce que le circuit de déclenchement Schmitt (3) comporte un amplificateur (10), une source de tension (4) fournissant la tension de référence étant connectée à son entrée inverseuse, une résistance d'entrée (7) maintenant la tension de valeur moyenne étant connectée à son entrée non inverseuse et une résistance de réaction positive (11) étant connectée à sa sortie.

3. Circuit selon la revendication 2, caractérisé en ce qu'une résistance de division de tension (9) mise à la terre est couplée à l'entrée non inverseuse de l'amplificateur (10).

4. Circuit selon l'une des revendications précédentes, caractérisé en ce que le commutateur (2) comporte au moins un transistor (24) dont la base est couplée à la sortie du circuit de déclenchement Schmitt (3) et dont le trajet émetteur-collecteur est commuté entre la borne de tension continue (Ub) et la charge (1).

5. Application d'un circuit selon l'une des revendications précédentes dans une torche munie d'une lampe à incandescence à halogènes comme charge (1).

Fig.1

(a.)

(b.)

Fig.2